# EUROPÄISCHE PATENTSCHRIFT

(11) **EP 0 593 066 B1**
(45) Veröffentlichungstag und Bekanntmachung des Hinweises auf die Patenterteilung: **04.12.1996**
(21) Anmeldenummer: 93116689.6
(22) Anmeldetag: 15.10.1993
(51) Int. Cl.: G01B 11/275

(54) **Vorrichtung zum Kalibrieren von Messeinheiten zur Spur-, Sturz- und Dackellaufmessung an Rädern von Kraftfahrzeugen in einem Fahrwerkstand**
Device to calibrate measuring-unities to determine toe-in-, camber- and flack of vehicle wheels in a driving-rack
Dispositif pour calibrer des unités de mesure des angles de chasse, de pincement et d'inclinaison des roues de voitures sur un dispositif support

(30) Priorität: 16.10.1992 DE 4234999
(43) Veröffentlichungstag der Anmeldung: 20.04.1994
(73) Patentinhaber: SCHENCK KOMEG GmbH, D-66571 Eppelborn (DE)
(72) Erfinder: Sander, Horst, D-66265 Heusweiler (DE); Weiser, Hans-Peter, Dr. Ing., D-66386 St. Ingbert (DE); Tentrup, Thomas, Dr. rer. nat., D-66459 Kirkel (DE)
(74) Vertreter: Vièl, Georg, Dipl.-Ing.

(56) Entgegenhaltungen:
- WO-A-89/04947
- FR-A- 2 319 141
- FR-A- 2 410 249
- US-A- 4 615 618

## Beschreibung

Die Erfindung betrifft eine Vorrichtung zum Kalibrieren von Meßeinheiten zur Spur-, Sturz- und Dackellaufmessung an Rädern von Kraftfahrzeugen in einem Fahrwerkstand, wobei die seitlich auf die Vorder- und Hinterräder des Kraftfahrzeugs zustellbaren und an die Räder antastbaren Meßeinheiten vor Beginn der Messungen mit Referenzflächen, die als Ersatz für die Fahrzeugräder dienen und beispielsweise vertikal ausgerichtete, in dem Fahrwerkstand angeordnete Antastplatten mit den Spur-, Sturz- und Dackellaufwinkeln Null darstellen, verglichen und Abweichungen der Meßeinheiten von den Referenzflächen erfaßt und bei den späteren Messungen der Spur-, Sturz- und Dackellaufwinkel an den Rädern berücksichtigt werden.

Es ist eine mechanische Vorrichtung zum Kalibrieren der vier Meßeinheiten eines Fahrwerkstandes zur Spur- und Sturzwinkelmessung der Vorder- und Hinterräder sowie zur Erfassung des Dackellaufs eines Kraftfahrzeuges bekannt, die als Bezugssystem für alle Messungen herangezogen und als Einrichtmeister bezeichnet wird. Beim Einrichtmeister handelt es sich um einen Metallrahmen, beispielsweise aus Aluminium, an dem als Antastpunkte für die zu kalibrierenden Meßeinheiten vier ebene Platten angebracht sind. Der Einrichtmeister hat die Abmessungen eines normalen Kraftfahrzeuges, und man könnte ihn als Referenz oder Idealfahrzeug bezeichnen, dessen vier, den Rädern eines Kraftfahrzeuges entsprechenden Platten den Spur- und Sturzwinkel Null aufweisen und das keinen Dackellauf hat.

Für die Kalibrierung werden die vier Ständer des Einrichtmeisters in Aufnahmen der Schwimmplatten des Fahrwerkstandes eingesteckt und die Schwimmplatten so ausgerichtet, daß sie in einer horizontalen Ebene liegen. Zur Kalibrierung der Meßeinheiten des Fahrwerkstandes werden die vier ebenen Platten des Einrichtmeisters von den Meßeinheiten wie ein normales Kraftfahrzeug vermessen, mögliche Abweichungen von Null abgespeichert und bei der Vermessung der Fahrwerksgeometrie eines "echten" Kraftfahrzeuges mit verrechnet.

Ein Nachteil des mechanischen Einrichtmeisters ist seine Größe, die seine Handhabbarkeit erschwert und das Verfahren der Kalibrierung kompliziert macht. Außerdem ergeben sich Schwierigkeiten bei der Lagerung der großvolumigen Rahmen, von den für jeden Fahrzeugtyp desonderte Modelle erforderlich sind.

In der DE 19 62 324 werden zwei Achsen, die auf meßbar verdrehbaren Böcken gelagert werden und mit meßbar einstellbaren Aufnahmen für Antastvorrichtung optischer oder mechanischer Art versehen sind, vorgeschlagen. Die Referenz zwischen den Böcken der beiden Achsen soll durch zweiteilig steckbar ausgebildete Streben hergestellt werden. Auch wird eine Mehrteiligkeit der Achsen vorgeschlagen. Da der Einrichtmeister das später zu vermessende Fahrzeug als Masterteil zur Kalibrierung des Fahrwerkstandes simulieren soll, beinhaltet die oben vorgeschlagene Einheit einen hohen zeitlichen Justieraufwand. Um die heute geforderten Meßgenauigkeiten für Spur- und Sturzmessung zu erreichen, muß mit einem hohen Fertigungsaufwand in Bezug auf die Steckverbindungen gerechnet werden. Da die Referenz der Einheiten für Vorder- und Hinterradachse über steckbare Streben, gar mehrteilig steckbare Streben, erreicht werden soll, ist eine hochpräzise Messung des Dackellaufes von Kraftfahrzeugen nicht möglich.

In der japanischen Patentschrift 2-98 602A wird die Referenz der beiden mit aufwendig justierbaren Antasteinheiten versehenen Achsen über eine mechanische Verbindung realisiert. Es ergibt sich eine schwer handhabbare mechanische Gesamtkonstruktion, die im ungünstigsten Falle per Kran in den Fahrwerkstand eingebracht werden muß und zusätzlich mit dem Problem einer geeigneten Lagerung nach dem Kalibriervorgang behaftet ist.

In der Patentschrift DE 27 27 420 handelt es sich um einen optisch messenden Fahrwerkstand mit der Möglichkeit der Selbstkalibrierung jeweils zweier gegenüber liegender, zu einer Achse gehörenden Meßeinheiten, d.h. die räumliche Zuordnung selbiger Meßeinheiten ist jederzeit ohne zusätzliche Hilfsmittel überprüfbar. Die Herstellung der Referenz zwischen den Meßeinheiten für Vorder- und Hinterräder wurde nicht gelöst. Damit existiert keine Aussagemöglichkeit über den Vorrichtungszustand der denkbaren Gesamtanordnung in Bezug auf Dackellaufmessungen an Kraftfahrzeugen. Um diesen Kalibrierzustand zu überprüfen, müßte ebenfalls ein Einrichtmeister verwendet werden.

Der Erfindung liegt deshalb die Aufgabe zugrunde, eine Vorrichtung zum Kalibrieren von Meßeinheiten für Spur-, Sturz- und Dackellaufmessungen bei Kraftfahrzeugen zu schaffen, die bezüglich Spur, Sturz und Dackellauf ein hochpräzises, den heutigen Anforderungen und der Meßgenauigkeit Rechnung tragendes Bezugssystem darstellt, die einfach zu handhaben, schnell und flexibel einsetzbar ist und mit einem Minimum an Justieraufwand auskommt. Diese Aufgabe wird durch eine Vorrichtung mit den Merkmalen des Anspruchs 1 gelöst.

Die Anordnung des vorderen Gestells erfolgt gemäß Anspruch 2.

Eine andere vorteilhafte Ausbildung ergibt sich aus Anspruch 3.

Eine weitere Ausbildung der Erfindung ist durch Anspruch 4 charkterisiert.

Die mit der Erfindung erzielten Vorteile bestehen insbesondere darin, daß die erfindungsgemäßen Vorrichtungen leicht zerlegbar sind, aus zwei Teilen bestehen und durch ihre zweiteilige Konzeption schwer handhabbaren Rahmenkonstruktion eines herkömmlichen Einrichtmeisters besser zu transportieren sind und einen geringeren Platzbedarf bei der Lagerung benötigen: Sie erfüllen die heutigen Anforderungen an ein hochpräzises Meßsystem und sind leicht justierbar.

Ausführungsbeispiele der Erfindung sind in der Zeichnung dargestellt und werden nachfolgend näher beschrieben.

Es zeigen
- Fig. 1: das Schema einer erfindungsgemäßen Vorrichtung in Draufsicht,
- Fig. 2: eine schematische Darstellung des Verlaufs der Laserstrahlen der Vorrichtung von Fig. 1 bei einem Sturzwinkel β und einem Versatz d,
- Fig. 3: das Schema einer anderen erfindungsgemäßen Vorrichtung in perspektivischer Darstellung und
- Fig. 4: das Schema einer weiteren erfindungsgemäßen Vorrichtung in perspektivischer Darstellung.

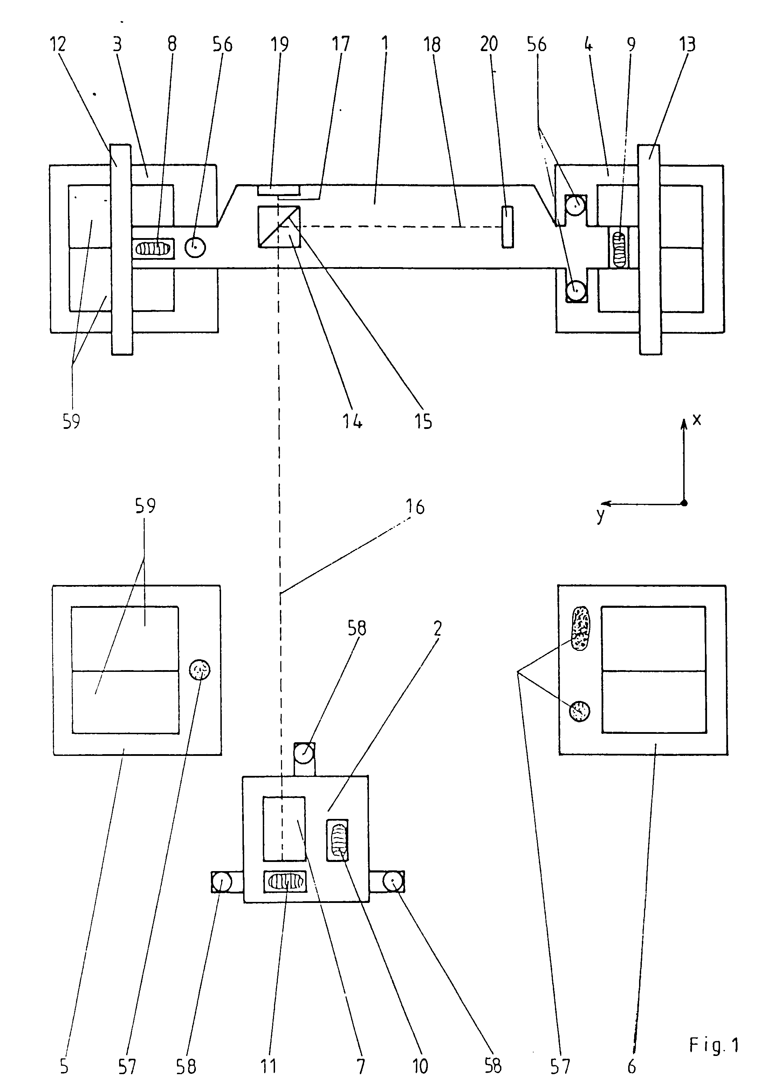

In Fig. 1 ist schematisch in Draufsicht eine einfache Ausbildung einer erfindungsgemäßen Vorrichtung zum Kalibrieren von Meßeinheiten zur Spur-, Sturz- und Dackellaufmessung an Rädern von Kraftfahrzeugen in Fahrwerkständen gezeigt. Die Vorrichtung besteht im wesentlichen aus zwei Teilen: einem ersten balkenartigen Gestell 1 mit an seinen beiden Stirnseiten parallel zueinander angeordneten, vertikalen links- und rechtsseitigen Antastplatten 12, 13 und einer Lasereinheit 2 mit einem hinteren Laser 7, beispielsweise einem Festkörperlaser. Das erste Gestell 1 ist mit Hilfe von einem in der Nähe seines einen Endes und von zwei in der Nähe seines anderen Endes befindlichen Stiften 56 einmal in zugeordnete Aufnahmen (in der Zeichnung nicht sichtbar) der vorderen Schwimmplatten 3, 4 und ein anderes Mal in zugeordnete Aufnahmen 57 der hinteren Schwimmplatten 5, 6 einsteckbar, während die Lasereinheit 2 mit Hilfe von drei seitlich angeordneten und in entsprechende Aufnahmen einsteckbaren Stiften 58 am hinteren Ende des Fahrwerkstandes fest positionierbar ist.

An dem ersten Gestell 1 und der Lasereinheit 2 befinden sich jeweils zwei senkrecht zueinander angeordnete erste winkelsensitive Organe 8, 9, 10, 11, mit deren Hilfe das erste Gestell 1 in den vorderen und hinteren Schwimmplatten 3, 4, 5, 6 und der Laser 7 hinter dem Fahrwerkstand horizontal ausrichtbar sind. Bevorzugt werden als winkelsensitive Organe Präszisions-Libellen eingesetzt, die in der weiteren Beschreibung dementsprechend auch benannt sind. Des weiteren ist an dem ersten Gestell 1 ein erster Strahlteiler 14 angeordnet, an dessen halbdurchlässiger Spiegelfläche 15 der von dem hinteren Laser 7 horizontal emittierte erste Laserstrahl 16 in einen geradlinig durchgehenden Laserteilstrahl 17 und in einen längs des ersten Gestells 1 reflektierten ersten Laserteilstrahl 18 aufspaltet. Der durchgehende erste Laserteilstrahl 17 trifft auf einen hinter dem Strahlteiler 14 angeordneten positionsempfindlichen ersten Photodetektor 19, beispielsweise eine Quadrantendiode, und der reflektierte Laserteilstrahl 18 auf einen senkrecht zu dem ersten Photodetektor 19 an dem ersten Gestell 1 angeordneten positionsempfindlichen zweiten Photodetektor 20.

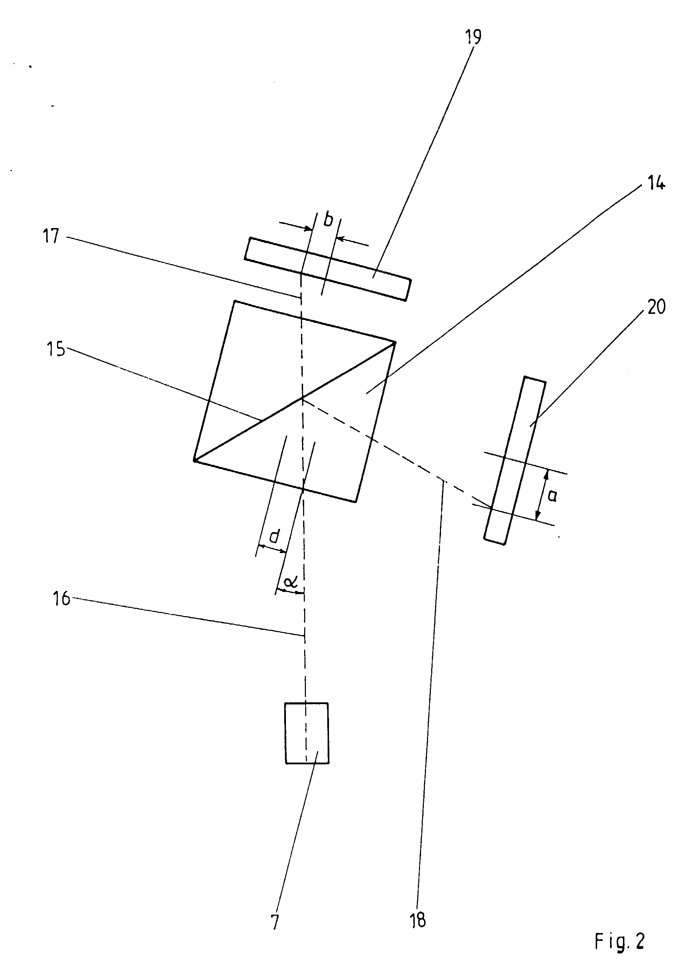

Zum Kalibrieren der Meßeinheiten eines Fahrwerkstandes wird vorab der Laser 7 am hinteren Ende des Fahrwerkstandes fest positioniert und mit Hilfe der beiden an der Lasereinheit 2 angeordneten Libellen 10, 11 justiert. Dann wird das erste Gestell 1 in die Aufnahmen der vorderen Schwimmplatten 3, 4 eingesteckt und mit Hilfe der beiden an dem ersten Gestell 1 angeordneten ersten Libellen 8, 9 ebenfalls justiert. Anschließend werden die vorderen Meßeinheiten zum Kalibrieren an die Antastplatten 12, 13 herangefahren und tasten diese an. Abweichungen von den justierten Antastplatten 12, 13 werden, wie in Fig. 2 dargestellt, anhand der Auftreffpunkte des durchgehenden und reflektierten Laserteilstrahls 17, 18 auf dem ersten und zweiten Photodetektor 19, 20 erfaßt. Aus der bekannten geometrischen Anordnung der Photodetektoren 19, 20 und des Strahlteilers 14 sowie aus den an den beiden Photodetektoren 19, 20 detektierten Strecken a, b lassen sich die Spurwinkel αᵥ und der Versatz dᵥ in Bezug zu dem ersten Laserstrahl 16 berechnen. Die gemessenen Werte werden als Kalibrierwerte in einem Rechner abgelegt und bei den Spur-, Sturz- und Dackellaufmessungen an einem Kraftfahrzeug berücksichtigt.

Die Kalibrierung der hinteren Meßeinheiten des Fahrwerkstandes erfolgt in gleicher Weise, nachdem das erste Gestell 1 in die entsprechenden Aufnahmen 57 der hinteren Schwimmplatten 5, 6 eingesteckt und justiert wurde. Nach Beendigung des Kalibriervorganges werden das erste Gestell 1 und die Lasereinheit 2 aus dem Fahrwerkstand entfernt, das zu vermessende Kraftfahrzeug in den Fahrwerkstand eingebracht und die Fahrzeugräder von den vier kalibrierten Meßeinheiten angetastet, wobei die Messungen aufgrund der in den Schwimmplatten 3, 4, 5, 6 vorhandenen antreibenden Rollen 59 vorteilhaft auch an laufenden Rädern durchführbar sind.

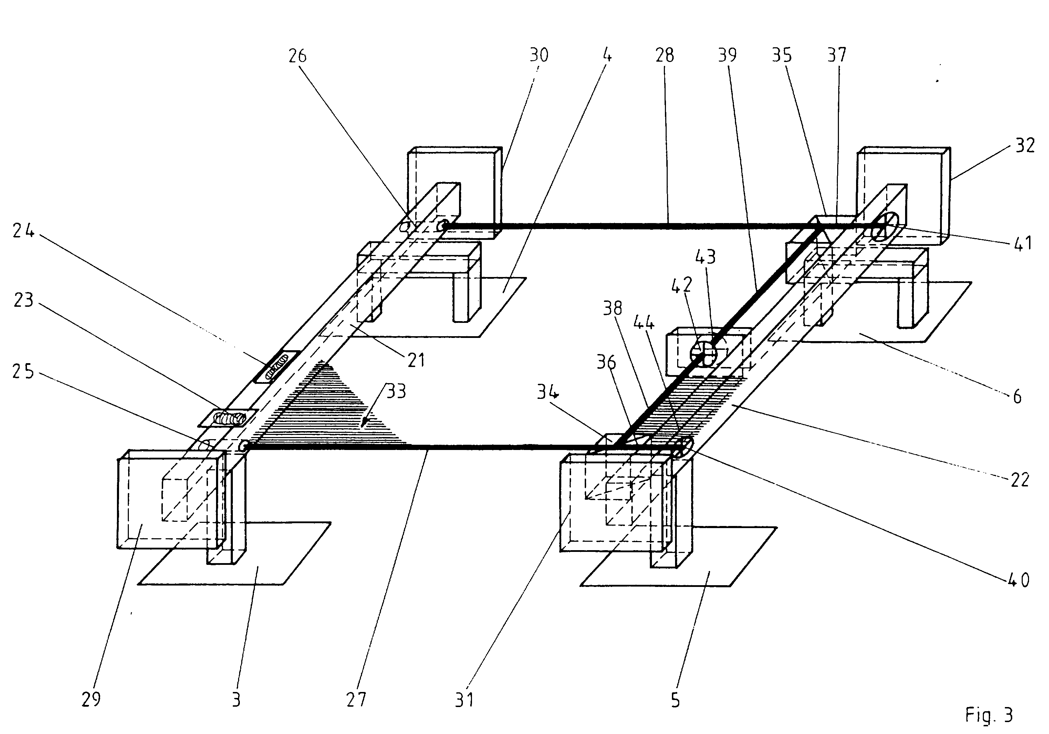

Eine bevorzugte Weiterbildung der erfindungsgemäßen Vorrichtung ist in Fig. 3 schematisch in perspektivischer Darstellung gezeigt. Die Vorrichtung setzt sich ebenfalls aus zwei Teilen zusammen: einem vorderen und einem hinteren balkenartigen Gestell 21, 22, wobei das vordere Gestell 21, wie bereits in Fig. 1 beschrieben, in dafür vorgesehene Aufnahmen der vorderen Schwimmplatten 3, 4 und das hintere Gestell 22 gleichzeitig in gleicher Weise in entsprechende Aufnahmen der hinteren Schwimmplatten 5, 6 des Fahrwerkstandes einsteckbar sind. Das vordere Gestell 21 weist in der Nähe seiner beiden Enden zwei äußere weitere Laser 25, 26 auf, die zwei parallel zueinander verlaufende weitere Laserstrahlen 27, 28 emittieren und mit Hilfe auf seiner Oberseite senkrecht zueinander angeordneter weiterer Libellen 23, 24 horizontal ausrichtbar sind. An seinen beiden Stirnseiten ist das vordere Gestell 21 mit einer linksseitigen und einer rechtsseitigen vorderen Antastplatte 29, 30 versehen, die parallel zu den weiteren Laserstrahlen 27, 28 und senkrecht zu der von ihnen aufgespannten ersten Ebene 33 orientiert sind.

Das hintere Gestell 22 weist an seinen Stirnseiten ebenfalls eine linksseitige und eine rechtsseitige hintere Antastplatte 31, 32 und zwei den äußeren Lasern 25, 26 zugeordnete äußere weitere Strahlteiler 34, 35 auf, in denen die auftreffenden äußeren Laserstrahlen 27, 28 in geradlinig durch sie durchgehende weitere Laserteilstrahlen 36, 37 und in von den hinteren Antastplatten 31, 32 weg längs des hinteren Gestells 22 reflektierte weitere Laserteilstrahlen 38, 39 aufspalten. Außerdem befinden sich zwischen den äußeren weiteren Strahlteilern 34, 35 des hinteren Gestells 22 zwei innere positionsempfindliche weitere Photodetektoren 42, 43 und hinter den äußeren Strahlteilern 34, 35 an der Rückseite dieses Gestells jeweils ein äußerer Photodetektor 40, 41. Die Vorrichtung ist so ausgebildet, daß die hinteren Antastplatten 31, 32 parallel zu den Auftreffflächen der inneren Photodetektoren 42, 43 und senkrecht zu einer von den Mittelpunkten der äußeren und inneren Photodetektoren 40, 41, 42, 43 am hinteren Gestell 22 aufgespannten zweiten Ebene 44 orientiert sind.

Zum Justieren der Vorrichtung wird das vordere Gestell 21 in dafür vorgesehene Aufnahmen der vorderen Schwimmplatten 3, 4 und das hintere Gestell 22 in dafür vorgesehene Aufnahmen der hinteren Schwimmplatten 5, 6 eingesteckt. Das vordere Gestell 21 wird mit Hilfe einer nicht dargestellten Höhenverstellung an dem vorderen Gestell unter Beobachtung der vorderen Libellen 23, 24 so nivelliert, daß die von den äußeren Laserstrahlen 27, 28 aufgespannte Ebene 33 horizontal ausgerichtet ist. Das hintere Gestell 22 wird so ausgerichtet, daß die äußeren Laserstrahlen 27, 28 senkrecht auf die zugeordneten Strahlteiler 34, 35 treffen und die geradlinig durch sie durchgehenden weiteren Laserteilstrahlen 36, 37 auf die äußeren weiteren Photodetektoren 40, 41 und die senkrecht dazu längs des hinteren Gestells 22 verlaufenden reflektierten weiteren Laserteilstrahlen 38, 39 auf die inneren weiteren Photodetektoren 42, 43 treffen.

Zeigen die Auftreffpunkte der Laserteilstrahlen 36, 37, 38, 39 auf den vier zugeordneten äußeren und inneren Photodetektoren 40, 41, 42, 43 keinerlei Abweichungen aus der Nullpunktlage, sind das vordere und hintere Gestell 21, 22 so zueinander angeordnet, daß die linksseitigen Antastplatten 29, 31 und die rechtsseitigen Antastplatten 30, 32 exakt in einer vertikalen Ebene ohne transversalen Versatz positioniert sind. An den äußeren und inneren Photodetektoren 40, 41, 42, 43 angezeigte transversale und/oder rotatorische Abweichungen des hinteren Gestells 22 von dieser Idealposition werden einem Rechner zugeführt, der Korrekturwerte zur rechnerischen oder mechanischen Korrektur der hinteren Antastplatten 31, 32 in Bezug zu den vorderen Antastplatten 29, 30 liefert.

Nach Beendigung des Justierens werden die Antastplatten 29, 30, 31, 32 von den vier Meßeinheiten des Fahrwerkstandes angetastet und die dabei gemessenen Werte als Kalibrierwerte in dem Rechner abgelegt und bei den Spur-, Sturz- und Dackellaufmessungen an einem Kraftfahrzeug berücksichtigt.

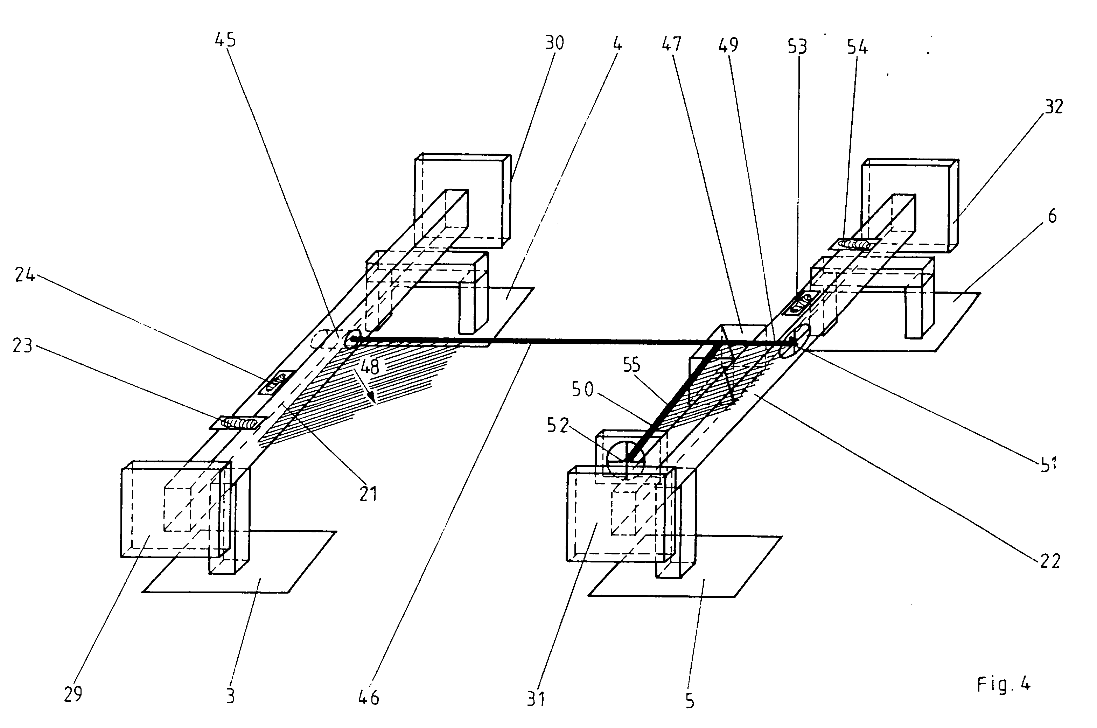

Fig. 4 zeigt schematisch in perspektivischer Darstellung eine andere vorteilhafte Ausbildung der erfindungsgemäßen Vorrichtung, die ebenfalls aus zwei Teilen besteht: dem vorderen und hinteren Gestell 21, 22. Anstelle der beiden äußeren weiteren Laser 25, 26 des zweiten Ausführungsbeispiels in Fig. 3 ist am vorderen Gestell 21 in Fig. 4 nur ein einzelner Laser 45 und dementsprechend am hinteren Gestell 22 nur ein weiterer einzelner Strahlteiler 47 für den von dem Laser 45 ausgesandten weiteren Laserstrahl 46 angeordnet. Außerdem befinden sich hinter dem einzelnen Strahteiler 47 und an einem Ende des hinteren Gestells 22 in Fig. 4 jeweils nur ein weiterer positionsempfindlicher Photodetektor 51, 52 zum Detektieren des durch den einzelnen Strahlteiler 47 durchgehenden weiteren Laserteilstrahles 49 und des in Längsrichtung des hinteren Gestells 22 reflektierten weiteren Laserteilstrahles 50. Zusätzlich befinden sich auf der Oberseite des hinteren Gestells 22 noch zwei senkrecht zueinander angeordnete weitere Libellen 53, 54.

Zum Justieren der Vorrichtung wird nach Einsetzen des vorderen Gestells 21 und des hinteren Gestells 22 in dafür vorgesehene Aufnahmen der vorderen und hinteren Schwimmplatten 3, 4, 5, 6 das vordere Gestell 21 mit Hilfe der vorderen Libellen 23, 24 so nivelliert, daß die von dem weiteren Laserstrahl 46 und dem vorderen Gestell 21 aufgespannte dritte Ebene 48 horizontal ausgerichtet ist, wobei die vorderen Antastplatten 29, 30 senkrecht zu dieser Ebene und parallel zu dem weiteren Laserstrahl 46 orientiert sind. Dann wird das hintere Gestell 22 mit Hilfe der hinteren weiteren Libellen 53, 54 horizontal ausgerichtet. Die von dem durchgehenden und dem reflektierten weiteren Laserteilstrahl 49, 50 aufgespannte vierte Ebene 55 und die von dem weiteren Laserstrahl 46 und dem vorderen Gestell 21 aufgespannte dritte Ebene 48 verlaufen dann parallel.

Zeigen die Auftreffpunkte der Laserteilstrahlen 49, 50 auf den beiden Photodetektoren 51, 52 des hinteren Gestells 22 keinerlei Abweichungen aus der Nullpunktlage, liegen die dritte und vierte Ebene 48, 55 identisch ineinander und die linksseitigen Antastplatten 29, 31 und die rechtsseitigen Antastplatten 30, 32 sind exakt in jeweils einer Ebene ohne transversalen Versatz positioniert.

Transversaler Versatz und rotatorische Abweichungen in Bezug auf den noch verbleibenden rotatorischen Freiheitsgrad des hinteren Gestells 22 werden vor dem inneren und äußeren weiteren Photodetektor 51, 52 angezeigt und einem Rechner zugeführt, der Korrekturwerte zur rechnerischen oder mechanischen Korrektur der hinteren Antastplatten 31, 32 in Bezug zu den vorderen Antastplatten 29, 30 liefert.

Nach Beendigung des Justierens werden die Antastplatten 29, 30, 31, 32 von den vier Meßeinheiten des Fahrwerkstandes angetastet und die dabei gemessenen Werte als Kalibrierwerte in dem Rechner abgelegt und bei den Spur-, Sturz- und Dackellaufmessungen an einem Kraftfahrzeug berücksichtigt.

## Patentansprüche

1. Vorrichtung zum Kalibrieren von Meßeinheiten zur Spur-, Sturz- und Dackellaufmessung an Rädern von Kraftfahrzeugen in einem Fahrwerkstand, wobei die seitlich auf die Vorder- und Hinterräder des Kraftfahrzeugs zustellbaren und an die Räder antastbaren Meßeinheiten vor Beginn der Messungen mit Referenzflächen, die als Ersatz für die Fahrzeugräder dienen und beispielsweise vertikal ausgerichtete, in dem Fahrwerkstand angeordnete Antastplatten mit den Spur-, Sturz- und Dackellaufwinkeln Null darstellen, verglichen und Abweichungen der Meßeinheiten von den Referenzflächen erfaßt und bei den späteren Messungen der Spur-, Sturz- und Dackellaufwinkel an den Rädern berücksichtigt werden, **dadurch gekennzeichnet**, daß ein erstes balkenartiges, in die Schwimmplatten (3, 4, 5, 6) eines Fahrwerkstandes einsteckbares Gestell (1) und eine am hinteren Ende des Fahrwerkstandes fest positionierbare Lasereinheit (2) mit einem hinteren Laser (7) vorhanden sind, daß das erste Gestell (1) und der hintere Laser (7) mit Hilfe von jeweils zwei an dem ersten Gestell (1) und der Lasereinheit (2) senkrecht zueinander angeordneten ersten winkelsensitiven Organen (8, 9, 10, 11) horizontal ausrichtbar sind, daß an beiden Stirnseiten des ersten Gestells (1) eine linksseitige und eine rechtsseitige Antastplatte (12, 13) vorhanden sind, die parallel zueinander und vertikal ausgerichtet sind, daß ferner an dem ersten Gestell (1) ein erster Strahlteiler (14) angeordnet ist, in dem der von dem hinteren Laser (7) horizontal emittierte erste Laserstrahl (16) in einen geradlinig durchgehenden ersten Laserteilstrahl (17) und in einen längs des ersten Gestells (1) reflektierten ersten Laserteilstrahl (18) aufspaltet, wobei der durchgehende erste Laserteilstrahl (17) auf einen ersten, hinter dem ersten Strahlteiler (14) angeordneten, positionsempfindlichen Photodetektor (19) und der reflektierte erste Laserteilstrahl (18) auf eine senkrecht zu dem ersten Photodetektor (19) an dem ersten Gestell (1) angeordneten positionsempfindlichen zweiten Photodetektor (20) treffen und daß der Spurwinkel α und der Versatz d der an die Antastplatten (12, 13) des justierten ersten Gestells (1) antastenden Meßeinheiten in Bezug zu dem ersten Laserstrahl (16) anhand der Auftreffpunktkoordinaten des durchgehenden und reflektierten Laserteilstrahls (17, 18) auf dem ersten und zweiten Photodetektor (19, 20) erfaßbar sind.

2. Vorrichtung nach Anspruch 1, **dadurch gekennzeichnet**, daß das erste Gestell (1) einmal in die vorderen Schwimmplatten (3, 4) und ein anderes Mal in die hinteren Schwimmplatten (5, 6) des Fahrwerkstandes einsteckbar ist und der Spurwinkel αᵥ und der Versatz dᵥ der vorderen Meßeinheiten und der Spurwinkel αₕ und der Versatz dₕ der hinteren Meßeinheiten erfaßbar sind.

3. Vorrichtung nach Anspruch 1, **dadurch gekennzeichnet**, daß statt des ersten Gestells (1) ein vorderes und ein hinteres balkenartiges Gestell (21, 22) vorhanden sind, wobei das vordere Gestell (21) in die vorderen Schwimmplatten (3, 4) und das hintere Gestell (22) in die hinteren Schwimmplatten (5, 6) des Fahrwerkstandes einsteckbar sind, daß das vordere Gestell (21) mit Hilfe von zwei, an dem vorderen Gestell (21) senkrecht zueinander angeordneten weiteren winkelsensitiven Organen (23, 24) horizontal ausrichtbar ist und in der Nähe seiner Enden mit zwei äußeren weiteren Lasern (25, 26) versehen ist, die zwei parallel zueinander verlaufende weitere Laserstrahlen (27, 28) emittieren, daß das vordere Gestell (21) eine linksseitige und eine rechtsseitige vordere Antastplatte (29, 30) an seinen beiden Stirnseiten aufweist, die parallel zu den weiteren Laserstrahlen (27, 28) und senkrecht zu der von den weiteren Laserstrahlen (27, 28) aufgespannten ersten Ebene (33) orientiert sind, daß das hintere Gestell (22) ebenfalls eine linksseitige und rechtsseitige hintere Antastplatte (31, 32) an seinen beiden Stirnseiten und zwei den äußeren Lasern (25, 26) zugeordnete äußere weitere Strahlteiler (34, 35) aufweist, in denen die weiteren Laserstrahlen (27, 28) in geradlinig durch sie durchgehende weitere Laserteilstrahlen (36, 37) und in von den hinteren Antastplatten (31, 32) weg reflektierte, längs des hinteren Gestells (22) verlaufende weitere Laserteilstrahlen (38, 39) aufspalten, wobei die durchgehenden weiteren Laserteilstrahlen (36, 37) auf zwei hinter den äußeren Strahlteilern (34, 35) angeordnete äußere positionsempfindliche weitere Photodetektoren (40, 41) und die reflektierten weiteren Laserteilstrahlen (38, 39) auf zwei in der Mitte des hinteren Gestells (22) befindliche innere positionsempfindliche weitere Photodetektoren (42, 43) treffen, und die Vorrichtung ferner so ausgebildet ist, daß die hinteren Antastplatten (31, 32) parallel zu den Auftreffflächen der inneren Photodetektoren (42, 43) und senkrecht zu einer von den Mittelpunkten der äußeren und inneren Photodetektoren (40, 41, 42, 43) am hinteren Gestell (22) aufgespannten zweiten Ebene (44) orientiert sind, und daß schließlich das hintere Gestell (22) so in Bezug zu dem vorderen Gestell (21) ausrichtbar ist, daß die linksseitigen Antastplatten (29, 31) und die rechtsseitigen Antastplatten (30, 32) exakt in jeweils einer vertikalen Ebene positioniert sind oder daß an den äußeren und inneren Photodetektoren (40, 41, 42, 43) angezeigte Abweichungen des hinteren Gestells (22) in einem Rechner zur Korrektur der hinteren Antastplatten (31, 32) in Bezug zu den vorderen Antastplatten (29, 30) erfaßbar sind und daß die Meßwerte der vier an die justierten Antastplatten (29, 30, 31, 32) antastenden Meßeinheiten des Fahrwerkstandes in dem Rechner speicherbar sind.

4. Vorrichtung nach Anspruch 3, **dadurch gekennzeichnet**, daß das vordere Gestell (21) statt der äußeren Laser (25, 26) einen einzelnen weiteren Laser (45) aufweist, der einen weiteren Laserstrahl (46) emittiert, der auf einen am hinteren Gestell (22) statt der äußeren Strahlteiler (34, 35) angeordneten weiteren Strahlteiler (47) trifft, daß das vordere Gestell (21) mit Hilfe der weiteren winkelsensitiven Organen (23, 24) so ausrichtbar ist, daß eine von dem weiteren Laserstrahl (46) und dem vorderen Gestell (21) aufgespannte dritte Ebene (48) horizontal orientiert ist, wobei die linksseitige und die rechtsseitige vordere Antastplatte (29, 30) vertikal ausgerichtet sind, daß der weitere Laserstrahl (46) in dem am hinteren Gestell (22) angeordneten weiteren Strahlteiler (47) in einen geradlinig durchgehenden weiteren Laserteilstrahl (49) und einen längs des hinteren Gestells (22) auf eine der hinteren Antastplatten (31, 32) zu reflektierten weiteren Laserteilstrahl (50) aufspaltet, wobei für den durchgehenden weiteren Laserteilstrahl (49) ein hinter dem weiteren Strahlteiler (47) angeordneter innerer weiterer Photodetektor (51) statt der inneren ersten Photodetektoren (42, 43) und für den reflektierten weiteren Laserteilstrahl (50) ein parallel zu den hinteren Antastplatten (31, 32) an dem hinteren Gestells (22) angeordneter weiterer Photodetektor (52) statt der äußeren ersten Photodetektoren (40, 41) vorgesehen sind, daß das hintere Gestell (22) mit Hilfe senkrecht zueinander angeordneter hinterer weiterer winkelsensitiven Organen (53, 54) horizontal ausrichtbar ist und eine von dem durchgehenden weiteren Laserstrahl (49) und dem reflektierten weiteren Laserteilstrahl (50) aufgespannte vierte Ebene (55) horizontal verläuft, und daß schließlich das hintere Gestell (22) so in Bezug zu dem vorderen Gestell (21) ausrichtbar ist, daß die dritte und vierte Ebene (48, 55) identisch ineinander liegen und die linksseitigen Antastplatten (29, 31) und die rechtsseitigen Antastplatten (30, 32) exakt jeweils in einer vertikalen Ebene ohne Höhenversatz positioniert sind, oder daß an dem inneren und äußeren Photodetektor (51, 52) angezeigte Abweichungen des hinteren Gestells (22) in einem Rechner zur Korrektur der hinteren Antastplatten (31, 32) in Bezug zu den vorderen Antastplatten (29, 30) erfaßbar sind und daß die Meßwerte der vier an die justierten Antastplatten (29, 30, 31, 32) antastenden Meßeinheiten des Fahrwerkstandes in dem Rechner speicherbar sind.

## Claims

1. A device for calibrating measurement units for measuring wheel-toe, camber and dog trot on wheels of motor vehicles in an undercarriage stand, wherein the measurement units - which can be delivered laterally to the front and rear wheels of the motor vehicle and which can be sensed at the wheels - are compared before the beginning of the measurements with reference areas which act as a substitute for the vehicle wheels and constitute for example vertically orientated sensing plates arranged in the undercarriage stand with wheel-toe, camber and dog-trot angles of zero, and deviations of the measurement units from the reference areas are detected and are taken into consideration during the subsequent measurements of the wheel-toe, camber and dog-trot angles at the wheels, **characterized in that** a first beam-like frame (1) insertable into the floating plates (3, 4, 5, 6) of an undercarriage stand and a laser unit (2) securely positionable at the rear end of the undercarriage stand and having a rear laser (7) are provided; the first frame (1) and the rear laser (7) can be orientated horizontally with the aid of two respective first angle-sensitive members (8, 9, 10, 11) mounted at right angles to each other on the first frame (1) and the laser unit (2); a left-hand and a right-hand sensing plate (12, 13) orientated vertically and parallel to each other are provided on the two front ends of the first frame (1); in addition, a first beam splitter (14), in which the first laser beam (16) emitted horizontally by the rear laser (7) is split into a first laser-beam part (17) extending in a straight line and into a first laser-beam part (18) reflected along the first frame (1), is mounted on the first frame (1), wherein the continuous first laser-beam part (17) strikes a first position-sensitive photodetector (19) arranged behind the first beam splitter (14) and the reflected first laser-beam part (18) strikes a second position-sensitive photodetector (20) mounted on the first frame (1) at a right angle to the first photodetector (19), and the wheel-toe angle α and the shift **d** of the measurement units sensed at the sensing plates (12, 13) of the adjusted first frame (1) can be detected at the first and second photodetector (19, 20) with reference to the first laser beam (16) by way of the impact-point coordinates of the continuous and reflected laser-beam parts (17, 18).

2. A device according to Claim 1, **characterized in that** the first frame (1) can be inserted once into the front floating plates (3, 4) and a second time into the rear floating plates (5, 6) of the undercarriage frame, and the wheel-toe angle αᵥ and the shift **d**_{**v**} of the front measurement units and the wheel-toe angle α_{**h**} and the shift **d**_{**h**} of the rear measurement units can be detected.

3. A device according to Claim 1, **characterized in that** instead of the first frame (1) a front and a rear beam-like frame (21, 22) are provided, wherein the front frame (21) can be inserted into the front floating plates (3, 4) and the rear frame (22) can be inserted into the rear floating plates (5, 6) of the undercarriage frame; the front frame (21) can be orientated horizontally with the aid of two further angle-senstive members (23, 24) arranged at a right angle to each other on the front frame (21) and is provided in the vicinity of its ends with two further outer lasers (25, 26) which emit two further laser beams (27, 28) extending parallel to each other; the front frame (21) comprises a left-hand and a right-hand front sensing plate (29, 30) at its two front ends which are orientated parallel to the further laser beams (27, 28) and at a right angle to the first plane (33) embracing the further laser beams (27, 28); the rear frame (22) likewise comprises a left-hand and a right-hand rear sensing plate (31, 32) at its two front ends and two further outer beam splitters (34, 35) which are associated with the outer lasers (25, 26) and in which the further laser beams (27, 28) are split into further laser-beam parts (36, 37) passing therethrough in a straight line and into further laser-beam parts (38, 39) reflected away from the rear sensing plates (31, 32) and extending along the rear frame (22), wherein the continuous further laser-beam parts (36, 37) strike two further outer position-sensitive photodetectors (40, 41) arranged behind the outer beam splitters (34, 35) and the reflected further laser-beam parts (38, 39) strike two further inner position-sensitive photodetectors (42, 43) arranged in the middle of the rear frame (22), and in addition the device is designed in such a way that the rear sensing plates (31, 32) are orientated parallel to the impact faces of the inner photodetectors (42, 43) and at a right angle to a second plane (44) embracing the centres of the outer and inner photodetectors (40, 41, 42, 43) on the rear frame (22), and finally the rear frame (22) can be orientated in such a way with respect to the front frame (21) that the left-hand sensing plates (29, 31) and the right-hand sensing plates (30, 32) are positioned precisely in one respective vertical plane or deviations of the rear frame (22) displayed on the outer and inner photodetectors (40, 41, 42, 43) can be detected in a computer in order to correct the rear sensing plates (31, 32) with respect to the front sensing plates (29, 30), and the measurement values of the four measurement units of the undercarriage stand sensed at the adjusted sensing plates (29, 30, 31, 32) can be stored in the computer.

4. A device according to Claim 3, **characterized in that** the front frame (21) comprises, instead of the outer lasers (25, 26), an individual further laser (45) which emits a further laser beam (46) which strikes a further beam splitter (47) mounted on the rear frame (22) instead of the outer beam splitters (34, 35); the front frame (21) can be orientated in such a way with the aid of the further angle-sensitive members (23, 24) that a third plane (48) containing the further laser beam (46) and the front frame (21) is orientated horizontally, wherein the left-hand and the right-hand front sensing plates (29, 30) are orientated vertically; the further laser beam (46) is split in the further beam splitter (47) mounted on the rear frame (22) into a further laser-beam part (49) extending in a straight line and a further laser-beam part (50) reflected along the rear frame (22) onto one of the rear sensing plates (31, 32), wherein instead of the first inner photodetectors (42, 43) a further inner photodetector (51) arranged behind the further beam splitter (47) is provided for the further continuous laser-beam part (49) and instead of the first outer photodetectors (40, 41) a further photodetector (52) arranged parallel to the rear sensing plates (31, 32) on the rear frame (22) is provided for the further reflected laser-beam part (50); the rear frame (22) can be orientated horizontally with the aid of further rear angle-sensitive members (53, 54) arranged at a right angle to one another, and a fourth plane (55) embracing the continuous laser-beam part (49) and the further reflected laser-beam part (50) extends horizontally; and finally the rear frame (22) can be orientated in such a way with respect to the front frame (21) that the third and fourth planes (48, 55) are situated identically one in the other and the left-hand sensing plates (29, 31) and the right-hand sensing plates (30, 32) are positioned precisely in one respective vertical plane without a vertical shift, or deviations of the rear frame (22) displayed on the inner and outer photodetectors (51, 52) can be detected in a computer in order to correct the rear sensing plates (31, 32) with respect to the front sensing plates (29, 30), and the measurement values of the four measurement units of the undercarriage stand sensed at the adjusted sensing plates (29, 30, 31, 32) can be stored in the computer.

## Revendications

1. Dispositif d'étalonnage d'unités de mesure pour mesurer la chasse, le pincement et l'inclinaison de roues de véhicules automobiles sur un banc d'essai automobile, dispositif dans lequel les unités de mesure, qui peuvent être avancées latéralement sur les roues avant et arrière du véhicule automobile et qui peuvent être pressées sur les roues, sont comparées, avant le début des mesures, à des surfaces de référence qui servent de substitut aux roues du véhicule et représentent des plaques de pression alignées par exemple verticalement et agencées dans le banc automobile avec les angles de chasse, de pincement et d'inclinaison nuls, et des écarts des unités de mesure vis-à-vis des surfaces de référence sont saisis et on en tient compte dans les mesures ultérieures des angles de chasse, de pincement et d'inclinaison sur les roues, caractérisé en ce qu'il est prévu un premier cadre (1) en forme de barre enfichable dans les plaques flottantes (3, 4, 5, 6) d'un banc d'essai automobile et une unité laser (2), avec une laser arrière (7), positionnable fixe à l'extrémité arrière du banc d'essai automobile, en ce que le premier cadre (1) et le laser arrière (7) peuvent être alignés horizontalement à l'aide, respectivement, de deux premiers organes (8, 9, 10, 11) sensibles à l'angle agencés perpendiculairement les uns aux autres sur le premier cadre (1) et l'unité laser (2), en ce qu'il est prévu, sur les deux côtés avant du premier cadre (1), une plaque de pression côté gauche et une plaque de pression côté droit (12, 13), qui sont alignées l'une avec l'autre verticalement, en ce que par ailleurs, sur le premier cadre (1), est agencée un première lame séparatrice (14), dans laquelle le premier rayon laser (16) émis horizontalement par le laser arrière (7) est scindé en un premier rayon laser partiel (17) traversant en ligne droite et en un premier rayon laser partiel (18) réfléchi le long du premier cadre (1), le premier rayon laser partiel (17) traversant rencontrant un premier photodétecteur (19) sensible à la position, agencé derrière la première lame séparatrice (14), et le premier rayon laser partiel réfléchi (18) rencontrant un deuxième photodétecteur (20) sensible à la position, agencé perpendiculairement au premier photodétecteur (19) sur le premier cadre (1), et en ce que l'angle de chasse α et le déport d des unités de mesure pressant les plaques de pression (12, 13) du premier cadre ajusté (1) par rapport au premier rayon laser (18) peuvent être saisis sur base des coordonnées des points de rencontre du rayon laser partiel traversant et du rayon laser partiel réfléchi (17, 18) sur le premier et le deuxième photodétecteurs (19, 20).

2. Dispositif selon la revendication 1,
caractérisé en ce que le premier cadre (1) peut être enfiché une fois dans les plaques flottantes avant (3, 4) et une autre fois dans les plaques flottantes arrière (5, 6) du banc d'essai automobile et l'angle de chasse αᵥ et le déport dᵥ des unités de mesure avant et l'angle de chasse αₕ et le déport dₕ des unités de mesure arrière peuvent être saisis.

3. Dispositif selon la revendication 1,
caractérisé en ce qu'il est prévu, en lieu et place du premier cadre (1), un cadre avant en forme de barre et un cadre arrière en forme de barre (21, 22), le cadre avant (21) pouvant être affiché dans les plaques flottantes avant (3, 4) et le cadre arrière (22) dans les plaques flottantes arrière (5, 6) du banc d'essai automobile, en ce que le cadre avant (21) peut être aligné horizontalement à l'aide de deux autres organes (23, 24) sensibles à l'angle agencés perpendiculairement l'un à l'autre, sur le cadre avant (21), et est pourvu, au voisinage de ses extrémités, de deux autres lasers externes (25, 26), qui émettent deux autres rayons laser (27, 28) s'étendant parallèlement l'un à l'autre, en ce que le cadre avant (21) présente une plaque de pression avant côté gauche et une plaque de pression côté droit (29, 30) sur ses deux faces frontales, qui sont orientées parallèlement aux autres rayons laser (27, 28) et perpendiculairement au premier plan (33) défini par les autres rayons laser (27, 28), en ce que le cadre arrière (22) présente également une plaque de pression arrière côté gauche et une plaque de pression arrière côté droit (31, 32) sur ses deux faces frontales et deux autres lames séparatrices externes (34, 35) affectées aux lasers externes (25, 26), lames dans lesquelles les autres rayons laser (27, 28) se scindent en d'autres rayons laser partiels (36, 37) traversant lesdites lames séparatrices en ligne droite et en d'autres rayons laser partiels (38, 39) réfléchis par les plaques de pression arrière (31, 32) et s'étendant le long du cadre arrière (22), les autres rayons laser partiels traversants (36, 37) rencontrant deux autres photodétecteurs (40, 41) externes sensibles à la position agencés derrière les lames séparatrices externes (34, 35) et les autres rayons laser partiels réfléchis (38, 39) rencontrant deux autres photodétecteurs (42, 43) internes sensibles à la position se trouvant au centre du cadre arrière (22), en ce que le dispositif est par ailleurs conformé en sorte que les plaques de pression arrière (31, 32) sont orientées parallèlement aux surfaces aux surfaces de rencontre des photodétecteurs internes (42, 43) et perpendiculairement à un deuxième plan (44) défini par les points centraux des photodétecteurs externes et internes (40, 41, 42, 43) sur le cadre arrière (22), et en ce qu'enfin, le cadre arrière (22) peut être aligné par rapport au cadre avant (21) en sorte que les plaques de pression côté gauche (29, 31) et les plaques de pression côté droit (30, 32) soient exactement positionnées, respectivement, dans un plan vertical ou que des écarts du cadre arrière (22) indiqués dans les photodétecteurs externes et internes (40, 41, 42, 43) puissent être saisis dans un ordinateur pour corriger les plaques de pression arrière (31, 32) par rapport aux plaques de pression avant (29, 30) et que les mesures des quatre unités de mesure du banc d'essai automobile pressant les plaques de pression ajustées (29, 30, 31, 32) puissent être mémorisées dans l'ordinateur.

4. Dispositif selon la revendication 3,
caractérisé en ce que le cadre avant (21) présente, au lieu des lasers externes (25, 26), un seul autre laser (45), qui émet un autre rayon laser (46) qui rencontre une autre lame séparatrice (47) agencée sur le cadre arrière (22) en lieu et place des lames séparatrices externes (34, 35), en ce que le cadre avant (21) peut être aligné à l'aide des autres organes sensibles à l'angle (23, 24), en ce qu'un troisième plan (48) défini par l'autre rayon laser (46) et le cadre avant (21) est orienté horizontalement, les plaques de pression avant côté gauche et côté droit (29, 30) étant alignées verticalement, en ce que l'autre rayon laser (46) est scindé, dans l'autre lame séparatrice (47) agencée sur le cadre arrière (22), en un autre rayon laser partiel (49) traversant en ligne droite et en un autre rayon laser partiel (50) réfléchi sur l'une des plaques de pression arrière (31, 32) le long du cadre arrière (22), un autre photodétecteur interne (51) agencé derrière l'autre lame séparatrice (47) étant prévu en lieu et place des premiers photodétecteurs internes (42, 43) pour l'autre rayon laser partiel traversant (49) et un autre photodétecteur (52) agencé parallèlement aux plaques de pression arrière (31, 32) sur le cadre arrière (22) étant prévu pour l'autre rayon laser partiel réfléchi (50), en lieu et place des premiers photodétecteurs externes (40, 41), en ce que le cadre arrière (22) peut être aligné horizontalement à l'aide d'autres organes arrière sensibles à l'angle (53, 54) agencés perpendiculairement l'un à l'autre et un quatrième plan (55) défini par l'autre rayon laser traversant (49) et par l'autre rayon laser partiel réfléchi (50) s'étend horizontalement, et en ce qu'enfin le cadre arrière (22) peut être aligné par rapport au cadre avant (21) de sorte que le troisième et le quatrième plans (48, 55) s'emboîtent mutuellement de manière identique et que les plaques de pression côté gauche (29, 31) et les plaques de pression côté droit (30, 32) soient positionnées de manière précise, respectivement, dans un plan vertical sans déport en hauteur, ou en ce que des écarts du cadre arrière (22) indiqués sur les photodétecteurs interne et externe (51, 52) peuvent être saisis dans un ordinateur pour corriger les plaques de pression arrière (31, 32) par rapport aux plaques de pression avant (29, 30) et en ce que les mesures des quatre unités de mesure (29, 30, 31, 32) pressant les plaques de pression ajustées (29, 30, 31, 32) peuvent être mémorisées dans l'ordinateur.
